# EUROPEAN PATENT APPLICATION

(11) **EP 4 844 444 A1**
(43) Date of publication of application: **25.11.2026**
(21) Application number: 24918917.6
(22) Date of filing: 18.06.2024
(51) Int. Cl.: G01S 13/86, G01S 13/08, G01S 13/937, G08G 3/02, G06T 7/60, G06T 5/00

(54) **SYSTEM AND METHOD FOR RECOGNIZING MARINE OBJECT BASED ON RADAR ATTENTION IN SHIP**

(30) Priority: 18.01.2024 KR 20240008332
(71) Applicant: Aivenautics Co., Ltd., Daejeon 34112 (KR)
(72) Inventor: HAN, Jung Wook, Sejong 30146 (KR); PARK, Jin Hyoung, Daejeon 34034 (KR); LEE, Hyeop Woo, Seoul 08754 (KR)
(74) Representative: Kim Kang, Jae Hee
(86) International application number: PCT/KR2024/008362
(87) International publication number: WO 2025/154883

(57) **Abstract**

A method for recognizing a marine object based on radar attention in a ship, according to the present invention, comprises the steps of: receiving a transmission signal of a radar reflected from an object; determining horizontal bearing information of the object on the basis of the received signal; generating an object region of interest by applying vertical beam width information of the radar to the horizontal bearing information; applying the object region of interest onto an image captured through a camera installed on the ship; and performing object recognition on the object region of interest on the image.

## Description

### Technical Field

The present invention relates to a radar attention-based maritime object recognition system and method for a ship.

### Background Art

A ship navigating at sea recognizes objects such as other ships by using various devices including radar, LiDAR, and cameras, and establishes a route for collision avoidance based on the recognition results.

However, conventional approaches merely allow the radar and the camera to separately acquire data and independently provide their own object recognition results. That is, because radio-wave-based radar and an optical-image-based camera operate as separate sensors to acquire independent data and provide separate object recognition results, management of the separated data may reduce the accuracy and reliability of object recognition and tracking.

For example, radar is generally suitable for long-range detection and is effective in identifying relatively large objects. However, radar has limitations when detecting small and distant objects or when detailed information is required. In particular, it has been difficult to identify, at a long distance, detailed information concerning small ships or floating objects, and visual identification by a navigator has been required to supplement such limitations.

In addition, camera-based object recognition requires substantial computing resources to analyze high-resolution images or video, thereby making real-time processing difficult. Further, because the detection range of a camera is limited compared with that of radar, proactive object detection and tracking cannot be performed based solely on object recognition results from the camera.

### Detailed Description of the Invention

### Technical Problem

An object of the present invention is to provide a radar attention-based maritime object recognition system and method capable of more rapidly and precisely recognizing an object at sea by setting a region of interest based on a radar-based object recognition result and applying the region of interest to an image acquired by a camera.

However, the technical problems to be solved by the present invention are not limited to those described above, and other technical problems may exist.

### Solution to Problem

According to a first aspect of the present invention, a radar attention-based maritime object recognition method for solving the above-described problem includes: receiving a transmitted radar signal reflected from an object; determining horizontal bearing information of the object based on the received signal; generating a region of interest of an object by applying vertical beamwidth information of the radar to the horizontal bearing information; applying the region of interest of the object to an image captured by a camera installed on a ship; and performing object recognition on the region of interest of the object in the image.

In some embodiments, the method may further include: estimating distance information between the object and the camera; and correcting a point on an image plane corresponding to the estimated distance information, within the region of interest of the object, as a horizontal lower boundary of the object region of interest.

In some embodiments, estimating the distance information between the object and the camera may include estimating, as the distance information between the object and the camera, distance information corresponding to a signal having the shortest distance among a plurality of signals received in response to the transmitted radar signal.

In some embodiments, generating the region of interest of the object by applying the vertical beamwidth information of the radar to the horizontal bearing information may include: detecting a horizon in the image captured by the camera; and correcting the horizon as a horizontal upper boundary of the object region of interest.

In some embodiments, the method may further include: receiving Automatic Identification System (AIS) information from another ship; determining whether a timestamp included in the AIS information matches a reception time of the received radar signal; when the timestamp matches the reception time, extracting pixel information corresponding to the object in the image based on position information and size information of the other ship included in the AIS information; and correcting the region of interest of the object based on the extracted pixel information corresponding to the object.

According to a second aspect of the present invention, a radar attention-based maritime object recognition system includes: a radar system configured to receive a transmitted radar signal reflected from an object, generate an object detection result, and generate a region of interest of an object by applying vertical beamwidth information of the radar to horizontal bearing information of the object determined based on the received signal; and a camera system configured to apply the region of interest of the object to an image captured by a camera installed on a ship and perform object recognition on the object region of interest.

In some embodiments, the camera system may generate feedback information regarding a result of performing object recognition based on the image and provide the feedback information to the radar system, and the radar system may modify and improve the radar-based object detection result by receiving and applying the feedback information.

In some embodiments, the radar system may identify fixed obstacle information including land, islands, and navigational buoys on an electronic navigational chart, and may match and provide remaining target information, excluding the identified fixed obstacles, with a result of performing the object detection.

According to another aspect of the present invention, a computer program for solving the above-described problem is combined with a computer as hardware to execute the radar attention-based maritime object recognition system and method, and is stored in a computer-readable recording medium.

Other specific details of the present invention are included in the detailed description and the drawings.

### Advantageous Effects of Invention

According to an embodiment of the present invention described above, accurate detection results for maritime objects may be provided by fusing radar information and camera information. In particular, detailed information of an object that could not be acquired from radar information may be acquired from camera information, and information generated during mutually associated detection processes, rather than independent object detection by the respective sensors, may be fused to enable faster and more accurate object detection.

The effects of the present invention are not limited to those described above, and other effects not described herein will be clearly understood by a person skilled in the art from the following description.

### BRIEF DESCRIPTION OF THE DRAWINGS

FIG. 1 is a block diagram of a maritime object recognition system according to an embodiment of the present invention.
FIGS. 2 to 4 are diagrams for describing a radar system according to an embodiment of the present invention.
FIG. 5 is a diagram for describing generation of a region of interest of an object according to an embodiment of the present invention.
FIG. 6 is a diagram for describing setting of a horizontal upper boundary according to an embodiment of the present invention.
FIGS. 7 and 8 are diagrams for describing application examples of a maritime object recognition system according to an embodiment of the present invention.
FIG. 9 is a diagram for describing recognition of a maritime object using an electronic navigational chart according to an embodiment of the present invention.
FIG. 10 is a diagram for describing recognition of a maritime object using AIS information according to an embodiment of the present invention.
FIG. 11 is a flowchart of a method performed by a radar attention-based maritime object recognition system according to an embodiment of the present invention.

### Best Mode for Carrying Out the Invention

Advantages and features of the present invention and methods of achieving the same will become apparent from the following embodiments described in detail with reference to the accompanying drawings. However, the present invention is not limited to the embodiments disclosed below and may be implemented in various different forms. The embodiments are provided merely to complete the disclosure of the present invention and to fully inform a person skilled in the art of the scope of the present invention, and the present invention is defined only by the scope of the claims.

The terminology used herein is for the purpose of describing embodiments and is not intended to limit the present invention. As used herein, singular forms include plural forms unless the context clearly indicates otherwise. The terms "comprises" and/or "comprising" used herein do not exclude the presence or addition of one or more other components in addition to the stated components. Throughout the specification, the same reference numerals refer to the same components, and "and/or" includes each of the stated components and all combinations of one or more thereof. Although terms such as "first" and "second" are used to describe various components, the components are not limited by such terms. The terms are used only to distinguish one component from another component. Accordingly, a first component described below may also be a second component within the technical spirit of the present invention.

Unless otherwise defined, all terms used herein, including technical and scientific terms, may have meanings commonly understood by a person skilled in the art to which the present invention pertains. Terms defined in commonly used dictionaries should not be interpreted ideally or excessively unless expressly and specifically defined herein.

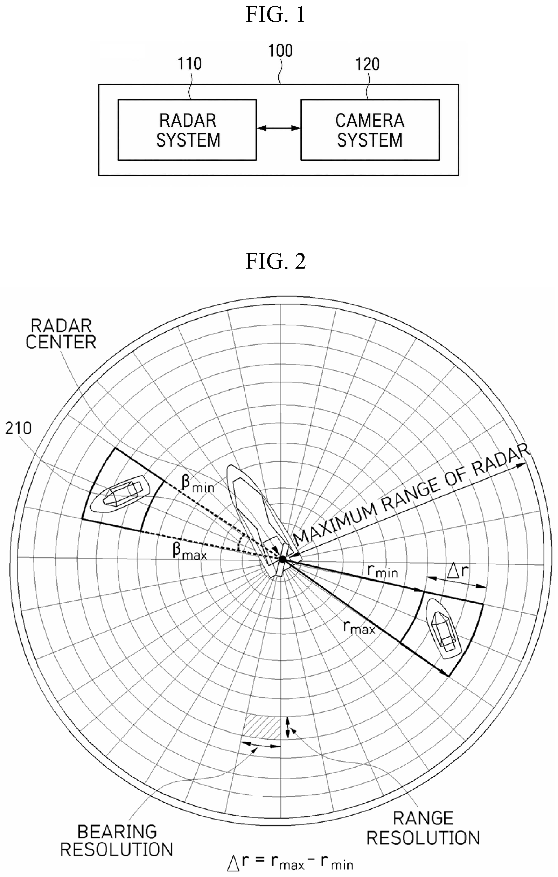

FIG. 1 is a block diagram of a maritime object recognition system according to an embodiment of the present invention.

The maritime object recognition system according to an embodiment of the present invention includes a radar system and a camera system.

The radar system receives a transmitted radar signal reflected from an object and generates an object detection result. The radar system applied to the present invention is a radar system operated on a ship and differs significantly in configuration and operation from an automotive radar system. Automotive radar is used to detect and track an object within a relatively short distance and generally operates over a range of several meters to several hundred meters. In contrast, marine radar can detect objects at longer distances than automotive radar, over a range of several kilometers, and is used to monitor a wide maritime area and prevent collisions with other ships.

In particular, in an embodiment of the present invention, the radar system generates a region of interest for an object (hereinafter, referred to as an "object region of interest") by applying vertical beamwidth information of the radar to horizontal bearing information of the object determined based on the received signal.

The camera system applies, to an image captured by a camera installed on the ship, the region of interest of the object generated by the radar system, and performs object recognition on the object region of interest.

Meanwhile, according to an embodiment of the present invention, the radar and the camera may be mechanically and firmly fixed. Accordingly, even when the ship moves, a relative position and attitude angle between the two sensors may be maintained constant. Such mechanical fixation minimizes effects caused by ship motion or vibration, enables stable acquisition of sensor data from the radar and the camera, and further prevents a change in the relative relationship between the radar and the camera so that reliable data for sensor fusion can be continuously acquired.

FIGS. 2 to 4 are diagrams for describing the radar system according to an embodiment of the present invention.

Referring to FIG. 2, the radar system determines horizontal bearing information 210 of an object based on a received signal. A signal emitted through an antenna interacts with the object and is reflected back. The signal received by the antenna includes information about the reflected object, and the information is represented by data such as time and signal strength.

The radar system may calculate a distance to the object by measuring emission and reception times of the received signal, and may determine a direction in which a radar beam was emitted and received based on a direction of the antenna. The radar system may derive the horizontal bearing information 210 of the object by calculating the distance to the object and an angle relative to the antenna direction. The horizontal bearing information 210 is used to indicate direction information on a horizontal map and may be represented by angular information.

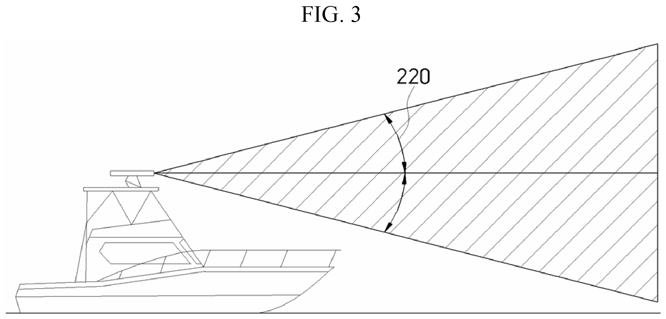

FIG. 3 illustrates vertical beamwidth information 220 of the radar. The vertical beamwidth information 220 represents a vertical detection region indicating how widely or narrowly the radar beam is emitted in a vertical direction and may be represented as an angular range. A ship may roll, pitch, or otherwise move in various directions while navigating. When the vertical beamwidth of the radar is narrow, a target object may fail to be detected or may be lost. Therefore, marine radar systems are required to have a vertical beamwidth of at least a prescribed number of degrees. In an embodiment of the present invention, the vertical beamwidth information 220 may be used to generate a region of interest of an object as described below.

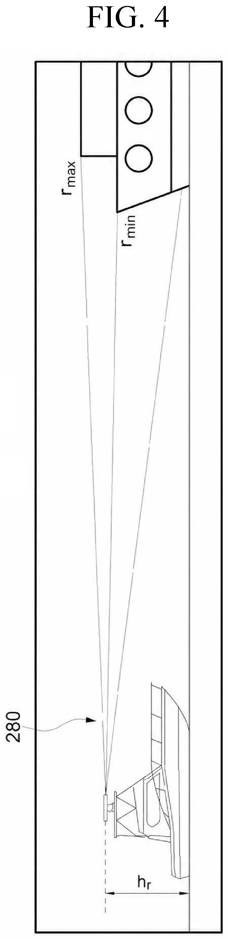

FIG. 4 illustrates distances between a radar beam and an object. A shape of the object cannot be determined merely from emission and reception of the radar beam. That is, as illustrated in FIG. 4, the radar antenna receives signals 230 having different distances due to the shape of the object. Even when the radar beam is emitted with a vertical beamwidth, the emitted beam is not received in an ordered sequence sufficient to represent the shape of the object.

Ultimately, unlike LiDAR, radar has relatively low range resolution and angular resolution, and an object detection result is represented by individually filled cells on a horizontal map. Accordingly, only distance and angular information of an object detected on the horizontal map can be obtained, while information in a vertical direction of the object cannot be acquired. Thus, only the distance and angular information of the object can be confirmed, and it has been impossible to specifically determine what the object is.

To address this problem, an embodiment of the present invention is characterized by generating an object recognition result capable of identifying a type, shape, and the like of an object by fusing an image captured by a camera.

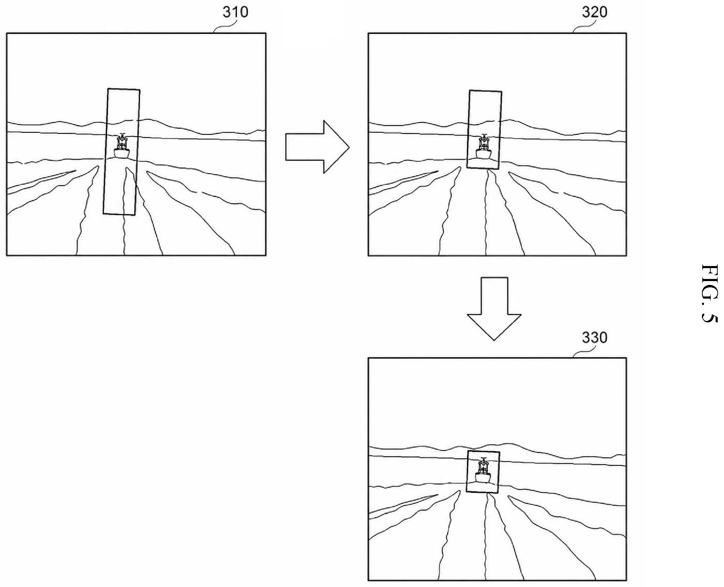

FIG. 5 is a diagram for describing generation of a region of interest of an object according to an embodiment of the present invention.

Before performing object recognition on an image captured by a camera installed on a ship, an embodiment of the present invention may generate a region of interest of an object to be applied to the image.

First, an initial object region of interest 310 may be generated as a bounding box configured based on horizontal bearing information and vertical beamwidth information of the radar. That is, a horizontal position of an object may be determined based on the horizontal bearing information acquired by the radar system, a vertical position of the object may be determined using minimum and maximum vertical beamwidths of the radar, and a bounding box configured using the determined information may be set as the region of interest of the object 310.

When the region of interest of the object 310 is applied to a camera image, object recognition may be performed more rapidly in the image, and accurate detailed information such as the size, shape, and type of the object may be identified based on the image. In particular, an embodiment of the present invention differs significantly from conventional techniques for setting a region of interest in that the region of interest 310 is set using radar information rather than information in the image.

Furthermore, an embodiment of the present invention may perform a correction process to more precisely reduce the size of the set object region of interest 310. Further reduction of the size of the region of interest of the object 310 reduces analysis time and computing resources required for object recognition in a high-resolution image, thereby providing a significant advantage in enabling real-time analysis.

For this purpose, an embodiment of the present invention estimates distance information between the object and the camera. As illustrated in FIG. 4, the distance information between the object and the camera may be estimated as distance information corresponding to a signal having the shortest distance among a plurality of signals received in response to the transmitted radar signal.

Next, within the region of interest 310 of the object, a point on the image plane corresponding to the estimated distance information between the object and the camera may be corrected so as to reduce the region of interest of the object to a horizontal lower boundary 320.

More specifically, on an image plane on which a camera image is formed, a bottom point on the image plane changes according to a horizontal relative distance between the object and the camera. In this case, the shorter the horizontal relative distance between the object and the camera, the lower the bottom point on the image plane.

Accordingly, an embodiment of the present invention may calculate minimum distance information based on a signal having the shortest distance to the object (Rmin in FIG. 2c) among received signals corresponding to the transmitted radar signal, and may correct (reduce) the horizontal lower boundary, which is a lower portion of the vertical beamwidth of the radar, to a position of a bottom point on the image plane corresponding to the minimum distance information.

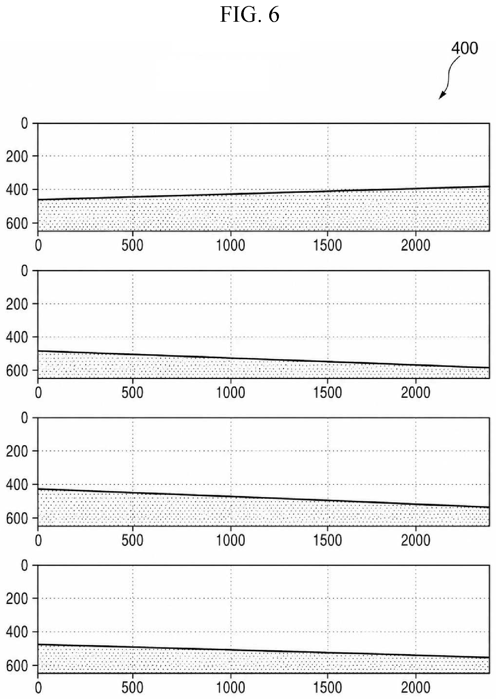

FIG. 6 is a diagram for describing setting of a horizontal upper boundary according to an embodiment of the present invention.

In addition, an embodiment of the present invention may detect a horizon 400 in an image captured by the camera and correct the horizon 400 as a horizontal upper boundary of the region of interest of the object 330. When the horizon 400 is detected, the object is located between the horizon 400 and the camera installation position. That is, because the object is located on the water, the horizontal upper boundary of the bounding box may be set to the horizon 400.

In this case, an embodiment of the present invention may correct the horizontal upper boundary based on distance information to the horizon. As an object in the image becomes farther from the present system 100, the object appears closer to the horizon due to perspective. Using this relationship, pixel information of the horizon may be determined based on distance information from the radar system 110 to the object, which is determined using a maximum reception distance, and the distance information to the horizon, and the horizontal upper boundary may be corrected based on the pixel information. That is, pixel information according to a radar distance may be extracted from a proportional relationship between pixel coordinates of the horizon and radar-based distance information of the object. This means that, as the distance increases, the pixel coordinate relative to the horizon increases proportionally, and as the distance decreases, the pixel coordinate decreases proportionally.

The distance information to the horizon may be calculated based on information concerning the radius of the Earth. For example, the distance information to the horizon may be calculated based on height information of the camera system 120 and length information of the radius of the Earth. Alternatively, when an object is present on the horizon, distance information of the object may be acquired from the radar system 110 and used as the distance information to the horizon.

When the horizon 400 cannot be detected in the image, for example, when the camera faces land, electronic navigational chart information, such as a coastline, may be used to correct the horizontal upper boundary.

Referring again to FIG. 5, after the region of interest of the object is generated, the camera system applies the region of interest of the object to the captured image and performs object recognition within the object region of interest. That is, the camera system identifies the object within the region of interest of the object using image processing and computer vision techniques, and may acquire detailed information such as the size, shape, and color of the object.

Meanwhile, according to an embodiment, when the camera system is installed at a low position, the camera views the horizon in an upward direction from below. In this case, a portion of an object in the image captured by the camera may be located above the horizon. That is, a portion of the object may be located below the horizon and another portion may be located above the horizon. Accordingly, the region of interest of the object generated by the radar system may fail to include the entire area of the object. An embodiment of the present invention may process such a case as an exception so that the camera system can identify the remaining portion of the object located above the horizon.

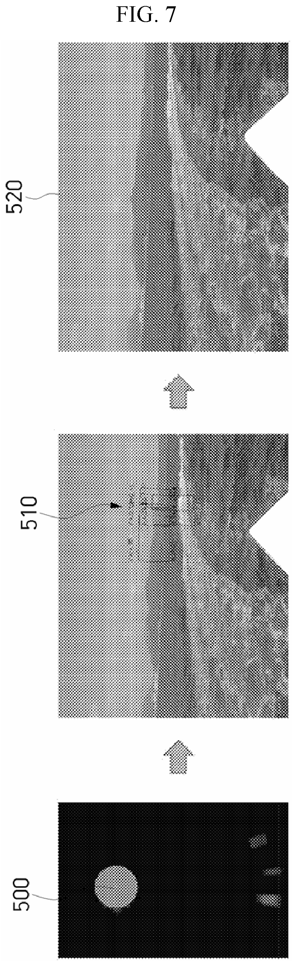

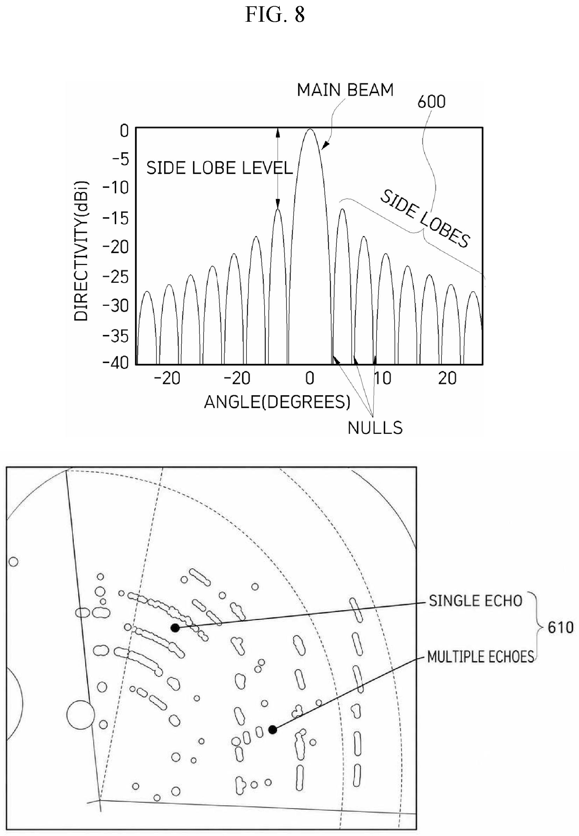

FIGS. 7 and 8 are diagrams for describing application examples of the maritime object recognition system according to an embodiment of the present invention.

When the maritime object recognition system according to an embodiment of the present invention is applied, noise may be removed from an object detection result of the radar system. That is, the camera system may generate feedback information regarding a result of performing object recognition based on an image and provide the feedback information to the radar system, and the radar system receiving the feedback information may modify and apply the radar-based object detection result.

For example, referring to FIG. 7, when sea-surface reflection 510 occurs in a radar-system-based object detection result, the radar system may recognize the reflection as an object and display the reflection on a screen 500. Accordingly, unless a navigator visually identifies the reflection, the navigator cannot clearly determine whether the reflection corresponds to an actual object.

In contrast, according to an embodiment of the present invention, a region of interest of an object is generated for a portion detected as an object by the radar system, and the camera system performs object detection only on the region of interest rather than performing vision processing over the entire image domain. Thus, whether the detected portion is an actual object or noise, such as sea clutter or rain/snow clutter, may be readily determined. When the detected portion is determined to be noise such as sea-surface reflection, feedback information may be generated and the noise portion may be removed from the screen of the radar system 520.

As another example, referring to FIG. 8, the radar system may recognize a false echo 610 caused by sidelobes 600 generated when a highly reflective object is present at a short distance as an object. That is, a radar signal may include a main beam and sidelobes 600, which are auxiliary radar signals generated around the main beam. The main beam is used for actual object detection, whereas the sidelobes 600 may cause the false echo 610 under conditions such as ambient noise or multiple reflections.

Even when the false echo 610 occurs, an embodiment of the present invention has an advantage in that the false echo may be readily removed through fusion processing with a camera image.

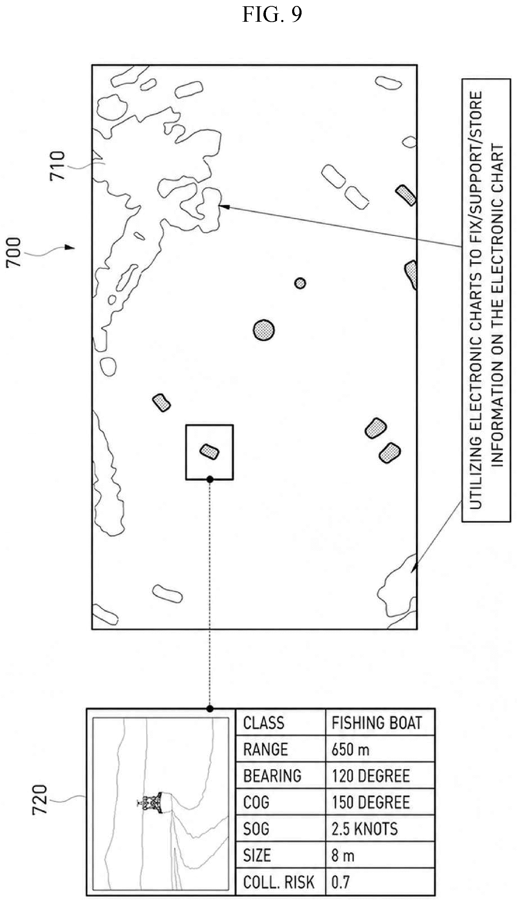

FIG. 9 is a diagram for describing recognition of a maritime object using an electronic navigational chart 700 according to an embodiment of the present invention.

In an embodiment, the radar system may identify fixed obstacle information 710 including land, islands, and navigational buoys on the electronic navigational chart 700. The fixed obstacle information 710, such as land, islands, and navigational buoys, is preestablished on the electronic navigational chart. Accordingly, after identifying the fixed obstacle information 710, the radar system may match and provide remaining target information, excluding the identified fixed obstacles, with a result of performing object detection.

Consequently, when detecting an object, the maritime object recognition system may rapidly generate a detection result without considering the fixed obstacle information 710 provided by the chart. By matching and providing the detection result with an object recognition result recognized by the camera system, the radar system allows a navigator to immediately view image information 720 when selecting a target of interest, and to view not only motion information but also class and shape information, including size, at a glance.

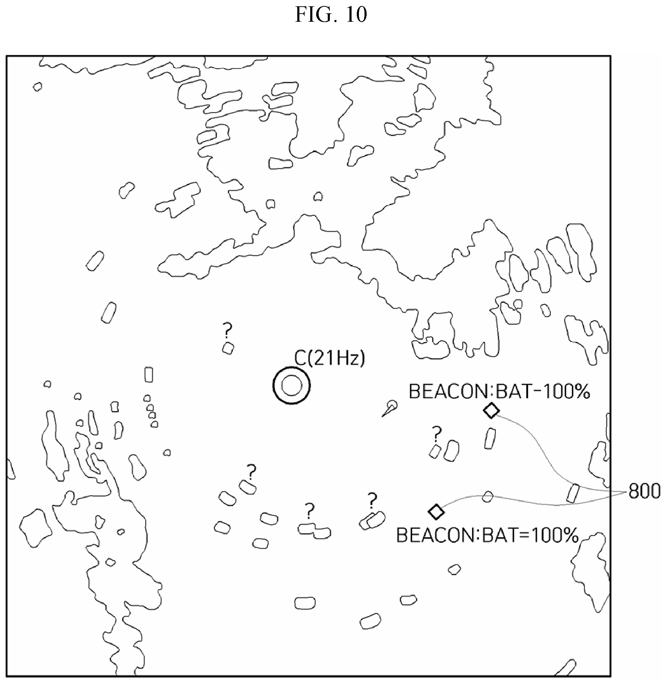

FIG. 10 is a diagram for describing recognition of a maritime object using AIS information according to an embodiment of the present invention.

Meanwhile, when the maritime object recognition system according to an embodiment of the present invention receives Automatic Identification System (AIS) information from another ship 800, the system may further use the AIS information to correct and further reduce the object region of interest, thereby more rapidly recognizing the other ship.

More specifically, when AIS information is received from another ship 800, it is determined whether a timestamp included in the received AIS information matches a reception time of a received radar signal. When the received AIS information does not include a timestamp, it may be determined whether the AIS information substantially matches an AIS reception time. Not all ships are equipped with AIS, and transmission intervals of AIS information vary from approximately two seconds to as long as ten minutes depending on travel speed or risk. Therefore, using only AIS information to recognize a position of another ship and perform collision avoidance may cause reliability problems. However, AIS information includes various types of static information regarding another ship, such as ship name, ship type, length, width, and identification number, dynamic information such as ship position, UTC time, course over ground, speed over ground, navigation status, and rate of turn, and voyage information. Accordingly, when AIS information is received, use of such information is highly advantageous for object recognition. Further, when AIS information is received while objects are densely clustered, the objects may be accurately identified and effectively classified based on the static and dynamic information included in the AIS information.

Accordingly, at a time when the radar reception time and the AIS information reception time substantially match, an embodiment of the present invention may extract pixel information corresponding to an object in an image based on position information and size information of another ship included in the AIS information. Based on the extracted pixel information corresponding to the object, the horizontal upper boundary and the horizontal lower boundary of the region of interest of the object may be corrected to most closely approximate the size of the object.

In this manner, at a time when reception timings of the radar signal and the AIS information coincide, the region of interest of the object may be further reduced to correspond to position and size information of the object, thereby ensuring reliability while enabling faster image processing.

In addition, an embodiment of the present invention may label a region of interest of an object generated based on a radar signal and AIS information, and an object recognition result based thereon, to construct training data for artificial-intelligence-model-based object recognition. When an artificial intelligence model is trained using the constructed training data, a region of interest of an object more closely corresponding to an actual size of an object may be generated.

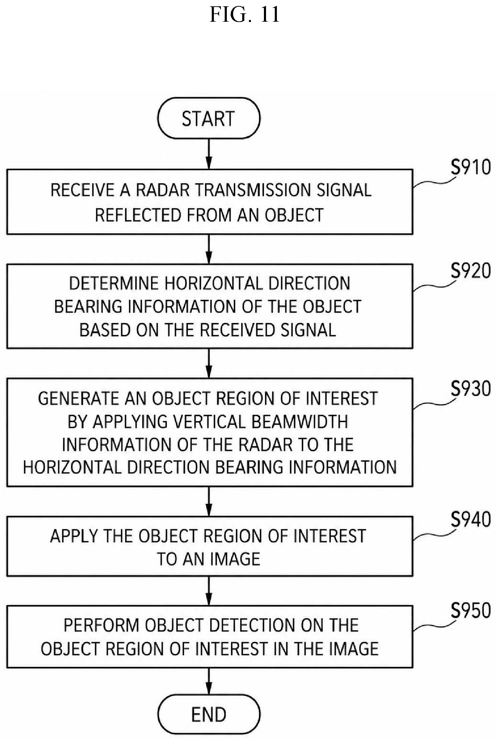

FIG. 11 is a flowchart of a method performed by the radar attention-based maritime object recognition system 100 according to an embodiment of the present invention.

In an embodiment of the present invention, a transmitted radar signal reflected from an object is first received in operation S910.

Next, horizontal bearing information of the object is determined based on the received signal in operation S920, and a region of interest of an object is generated by applying vertical beamwidth information of the radar to the horizontal bearing information in operation S930.

Next, the region of interest of the object is applied to an image captured by a camera installed on a ship in operation S940, and object detection and identification are performed on the region of interest of the object in the image in operation S950.

In the above description, operations S910 to S950 may be further divided into additional operations or combined into fewer operations according to an implementation of the present invention. Further, some operations may be omitted as necessary, and an order of the operations may be changed. In addition, the description of FIGS. 1 to 10 and the description of FIG. 11 may be mutually applied.

The embodiments of the present invention described above have been described based on an example in which a ship equipped with radar does not roll or pitch. When the ship moves, navigation information of the ship, including position and attitude angle, may be used to compensate for motion of a body to which the radar and the camera are fixed, thereby stably acquiring accurate data.

Meanwhile, embodiments of the present invention may be implemented as a program or application and stored in a medium so as to be executed in combination with a computer as hardware.

The above-described program may include code encoded in a computer language, such as C, C++, JAVA, Ruby, or machine language, that can be read by a processor or central processing unit (CPU) of a computer through a device interface of the computer so that the computer reads the program and executes the methods implemented by the program. The code may include functional code related to functions defining operations required to perform the methods, and may include control code related to execution procedures required for the processor of the computer to perform the functions according to a prescribed procedure. The code may further include memory-reference-related code indicating a location or address in an internal or external memory of the computer at which additional information or media required for the processor of the computer to perform the functions is to be referenced. Further, when the processor of the computer is required to communicate with another remote computer or server to perform the functions, the code may further include communication-related code indicating how to communicate with the other remote computer or server using a communication module of the computer and what information or media is to be transmitted or received during the communication.

The storage medium refers to a medium that semi-permanently stores data and is readable by a device, rather than a medium such as a register, cache, or memory that stores data only for a short period of time. Examples of the storage medium include, but are not limited to, a read-only memory (ROM), a random-access memory (RAM), a compact disc read-only memory (CD-ROM), a magnetic tape, a floppy disk, and an optical data storage device. That is, the program may be stored in various recording media on various servers accessible by the computer or in various recording media of the computer of a user. Further, the medium may be distributed over computer systems connected through a network, and computer-readable code may be stored in a distributed manner.

The foregoing description of the present invention is provided for illustrative purposes, and a person skilled in the art will understand that the present invention may be readily modified into other specific forms without changing the technical spirit or essential features of the present invention. Therefore, the embodiments described above should be understood as illustrative in all respects and not limiting. For example, each component described as a single component may be implemented in a distributed manner, and similarly, components described as being distributed may be implemented in a combined form.

The scope of the present invention is defined by the claims set forth below rather than by the detailed description, and all changes or modifications derived from the meaning and scope of the claims and equivalents thereof should be construed as being included within the scope of the present invention.

## Claims

1. A method performed by a computer, the method comprising:
receiving a transmitted signal of a radar reflected from an object;
determining horizontal bearing information of the object based on the received signal;
generating a region of interest (ROI) of the object by applying vertical beamwidth information of the radar to the horizontal bearing information;
applying the ROI of the object onto an image captured by a camera installed on a ship; and
performing object recognition on the ROI of the object on the image.

2. The method of claim 1, further comprising:
estimating distance information between the object and the camera; and
correcting a point on an image plane corresponding to the estimated distance information in the ROI of the object to be a horizontal lower boundary of the ROI of the object.

3. The method of claim 2, wherein the estimating of the distance information between the object and the camera comprises:
estimating, as the distance information between the object and the camera, distance information corresponding to a signal having a shortest distance among a plurality of signals received in response to the transmitted signal of the radar.

4. The method of claim 2, wherein the generating of the ROI of the object by applying the vertical beamwidth information of the radar to the horizontal bearing information comprises:
detecting a horizon on the image captured by the camera; and
correcting the horizon to be a horizontal upper boundary of the ROI of the object.

5. The method of claim 4, wherein the correcting of the horizon to be the horizontal upper boundary of the ROI of the object comprises:
calculating distance information to the horizon;
determining pixel information of the detected horizon based on the distance information to the horizon and radar-based distance information on the object; and
correcting the horizontal upper boundary based on the determined pixel information of the horizon.

6. The method of claim 1, further comprising:
receiving automatic identification system (AIS) information from another ship;
determining whether a timestamp included in the AIS information matches a reception time of the received signal of the radar;
extracting, when the timestamp matches the reception time as a result of the determining, pixel information corresponding to the object on the image based on position information and size information of the other ship included in the AIS information; and
correcting the ROI of the object based on the extracted pixel information corresponding to the object.

7. A radar attention-based maritime object recognition system in a ship, the system comprising:
a radar system configured to receive a transmitted signal of a radar reflected from an object to generate an object detection result, and generate a region of interest (ROI) of the object by applying vertical beamwidth information of the radar to horizontal bearing information of the object determined based on the received signal; and
a camera system configured to apply the ROI of the object onto an image captured by a camera installed on the ship, and perform object recognition on the ROI of the object.

8. The system of claim 7, wherein the camera system is configured to generate feedback information on a result of performing the object recognition based on the image and provide the feedback information to the radar system, and
the radar system is configured to correct and reflect a radar-based object detection result in response to receiving the feedback information.

9. The system of claim 7, wherein the radar system is configured to identify fixed obstacle information including land, an island, and a navigation buoy on an electronic navigational chart, match remaining target information, excluding the identified fixed obstacles, with a result of performing the object detection, and provide the matched result.
